# EUROPÄISCHE PATENTSCHRIFT

(11) **EP 2 785 985 B1**
(45) Veröffentlichungstag und Bekanntmachung des Hinweises auf die Patenterteilung: **02.05.2018**
(21) Anmeldenummer: 12797716.3
(22) Anmeldetag: 30.11.2012
(51) Int. Cl.: F01K 7/32, F01K 23/06, F01K 25/06, F01K 25/08, F02G 5/04

(54) **VORRICHTUNG UND VERFAHREN ZUR NUTZUNG DER ABWÄRME EINER BRENNKRAFTMASCHINE, INSBESONDERE ZUR NUTZUNG DER ABWÄRME EINES FAHRZEUGMOTORS**
DEVICE AND METHOD FOR UTILIZING THE WASTE HEAT OF AN INTERNAL COMBUSTION ENGINE, IN PARTICULAR FOR UTILIZING THE WASTE HEAT OF A VEHICLE ENGINE
DISPOSITIF ET PROCÉDÉ PERMETTANT DE RÉCUPÉRER LA CHALEUR DÉGAGÉE PAR UN MOTEUR À COMBUSTION INTERNE, EN PARTICULIER DE RÉCUPÉRER LA CHALEUR DÉGAGÉE PAR LE MOTEUR D'UN VÉHICULE

(30) Priorität: 02.12.2011 DE 102011119977
(43) Veröffentlichungstag der Anmeldung: 08.10.2014
(73) Patentinhaber: Mitri, Mikhael, 47058 Duisburg (DE); Von Lavante, Alena, 45219 Essen (DE)
(72) Erfinder: Mitri, Mikhael, 47058 Duisburg (DE); Von Lavante, Alena, 45219 Essen (DE)
(74) Vertreter: Hohendorf, Carsten
(86) Internationale Anmeldenummer: PCT/EP2012/004963
(87) Internationale Veröffentlichungsnummer: WO 2013/079218

(56) Entgegenhaltungen:
- EP-A2- 2 410 153
- WO-A1-95/02115
- WO-A1-2011/034984
- WO-A1-2011/066089
- WO-A1-2013/059687
- WO-A2-2010/126980
- WO-A2-2012/074911
- DE-A1-102006 035 272
- US-A- 3 376 706
- US-A- 3 971 211

## Beschreibung

Die Erfindung betrifft eine Vorrichtung und ein Verfahren zur Nutzung der Abwärme einer Brennkraftmaschine, insbesondere zur Nutzung der Abwärme eines Fahrzeugmotors.

Moderne Brennkraftmaschinen wie beispielsweise Fahrzeugmotoren, insbesondere Dieselmotoren, weisen eine hohe Effizienz auf und haben sich dem optimalen Carnot'schem Wirkungsgrad, welcher den höchstmöglichen theoretischen Wirkungsgrad bei der Umwandlung von Wärmeenergie in mechanische Energie beschreibt, stark angenähert. Zukünftige Wirkungsgradsteigerungen sind nur noch in kleinen Maßen zu erwarten und durch die verwendeten Materialien sowie die stetig steigenden Emissionsstandards begrenzt. Eine Möglichkeit der verbleibenden Wirkungsgradsteigerung ist die Nutzung der Abwärme einer Brennkraftmaschine, insbesondere der Nutzung der Abwärme eines Fahrzeugmotors, da sich beispielsweise im Falle eines Dieselmotors im Abgasstrom noch ca. 60 % der Brennwertenergie befinden und im Falle eines Benzinmotors zwischen 70 % und 80 % der Brennwertenergie.

Die Nutzung von Abwärme zur Wirkungsgradsteigerung ist beispielsweise von Dampfturbinen in einem Gas- und Dampfkombikraftwerk oder von Abgasturbinen von großen Schiffsmotoren bekannt. Dabei wird die in dem Abgasstrom befindliche Energie dazu verwendet eine sekundäre Wärmemaschine zu heizen. Diese sekundären Wärmemaschinen sind jedoch sehr komplex und aufgrund der erforderlichen Größe und des erforderlichen Gewichts der Wärmetauscher für den Verdampfer und den Kondensator nicht in Fahrzeugen einsetzbar.

Bei Brennkraftmaschinen, insbesondere bei Fahrzeugmotoren, ist weiterhin zu beachten, dass lediglich ca. 50 % der im Abgasstrom befindlichen Brennerwertenergie über das Abgasrohr entweicht und die verbleibenden ca. 50 % der im Abgasstrom befindlichen Brennwertenergie über die Motorkühlung bei bisher energetisch nicht benutzbaren Temperaturen von ca. 120° C bis 140° C abgeführt werden. Die Druckschrift WO-2010/126980 offenbart eine Vorrichtung zur Nutzung der Abwärme einer Brennkraftmaschine umfassend einen Rankine Arbeitskreislauf, wobei das Arbeitsmedium des Rankine Arbeitskreislaufes Kohlenstoffdioxid ist, welches sich teilweise in einem superkritischen Zustand befindet. Der Erfindung liegt somit die Aufgabe zugrunde, eine Vorrichtung und ein Verfahren zur Nutzung der Abwärme einer Brennkraftmaschine, insbesondere zur Nutzung der Abwärme eines Fahrzeugmotors, bereitzustellen, welche sehr kompakt ist, ein geringes Gewicht aufweist und dazu geeignet ist, die im Abgasstrom enthaltene Brennwertenergie schon ab Temperaturen von 100° C, insbesondere 120° C bis 140° C, zu nutzen.

Die Aufgabe wird gelöst durch eine Vorrichtung zur Nutzung der Abwärme einer Brennkraftmaschine gemäß Anspruch 1, insbesondere zur Nutzung der Abwärme eines Fahrzeugmotors, umfassend mindestens einen Wärmetauscher, zur Übertragung der Abwärme der Brennkraftmaschine auf ein Arbeitsmedium; mindestens eine mit einem Generator verbundene Turbine zur Erzeugung mechanischer oder elektrischer Energie, wobei die Turbine mittels des Arbeitsmediums angetrieben wird; mindestens einen Kühler zur Abkühlung des Arbeitsmediums; mindestens einen Kompressor, zum Verdichten des Arbeitsmediums; und mindestens einen Arbeitsmediumkreislauf mit Leitungen für das Arbeitsmedium, welche sich dadurch auszeichnet, dass das Arbeitsmedium, vorzugsweise Kohlenstoffdioxid, Propan, Methanol oder Ethanol oder eine Mischung dieser Fluide, im gesamten Arbeitsmediumkreislauf in einem überkritischen/superkritischen Zustand ist. Der kritische Punkt von Kohlenstoffdioxid liegt z. B. bei 30,98° C und 73,75 bar, bei dessen Überschreiten Kohlenstoffdioxid in einem überkritischen/superkritischen Zustand vorliegt. Erfindungsgemäß weist das Arbeitsmedium für Kohlenstoffdioxid bei einem Betrieb der erfindungsgemäßen Vorrichtung eine Temperatur von über 30,98° C auf und wird mittels des Kompressors mit mindestens 73,75 bar verdichtet. Für die anderen Arbeitsmedien (Propan, Methanol, Ethanol) oder ihre Mischungen gelten nach dem Kompressor die entsprechenden Temperaturen und Drücke oberhalb des kritischen Punktes. Das Arbeitsmedium ist im gesamten Arbeitsmediumkreislauf in einem überkritischen/superkritischen Zustand. Aufgrund der Lage des kritischen Punktes des Arbeitsmediums, wie z. B. Kohlenstoffdioxid, ist die erfindungsgemäße Vorrichtung dazu geeignet, selbst bei relativ niedrigen Temperaturen des Abgasstroms der Brennkraftmaschine, wie beispielsweise 120° C bis 140° C der Motorkühlung, die darin enthaltene Brennwertenergie zu nutzen.

Beispielsweise ist die Dichte von Kohlenstoffdioxid in einem überkritischen/superkritischen Zustand mit der Dichte von Wasser vergleichbar, wobei jedoch die Viskosität des Kohlenstoffdioxids im überkritischem/superkritischem Zustand der eines Gases entspricht und die Schallgeschwindigkeit des überkritischen/superkritischem Kohlenstoffdioxids mit der Schallgeschwindigkeit von Flüssigkeiten vergleichbar ist. Aufgrund der Energiedichte des überkritischem/superkritischem Kohlenstoffdioxids ist es möglich, die erfindungsgemäße Vorrichtung extrem kompakt auszuführen und in einem Fahrzeug zu integrieren. Beispielsweise würden die Leitungen für das Arbeitsmedium des Arbeitsmediumkreislaufs für einen Dieselmotor mit 103 PS und einer in dem Abgasstrom enthaltenen Brennwertenergie von 200 kW lediglich einen Durchmesser von 6 mm aufweisen.

Im Gegensatz zu einer mit Wasserdampf angetriebenen sekundären Wärmemaschine ist eine beispielsweise durch überkritisches/superkritisches Kohlenstoffdioxid angetriebene sekundäre Wärmemaschine nicht mehr von einem Phasenwechsel des Arbeitsmediums abhängig, wodurch die verwendeten Turbinen und Kühler wesentlich kompakter ausgebildet werden können.

Die Nutzung von ca. 10 % bis 15 % der Abwärmeleistung der Brennkraftmaschine würde beispielsweise zu einer Reduzierung des Treibstoffverbrauchs zwischen 20 % und 40 % führen, je nach verwendeten Fahrzeugmotor.

Die erfindungsgemäße Vorrichtung ist insbesondere in Hybridfahrzeugen einsetzbar, da während des Betriebs der Brennkraftmaschine des Hybridfahrzeugs die Akkumulatoren des Elektroantriebs geladen werden können oder gleichzeitig der Elektroantrieb betrieben werden kann.

Nach einer Variante der Erfindung umfasst die erfindungsgemäße Vorrichtung weiterhin mindestens eines Rekuperator, welcher Wärme von einem zu kühlenden Fluidstrom auf einen zu erwärmenden Fluidstrom überträgt, wobei der Rekuperator beispielsweise das Arbeitsmedium nach der mindestens einen Turbine abkühlt und das Arbeitsmedium vor dem wenigstens einen Wärmetauscher erwärmt. Der Rekuperator erhöht somit den Wirkungsgrad der erfindungsgemäßen Vorrichtung dadurch, dass er die in den Arbeitsmedium enthalte Restwärme nach der Turbine dazu verwendet, das Arbeitsmedium vor dem Wärmetauscher vorzuwärmen, wodurch das Arbeitsmedium in dem wenigstens einen Wärmetauscher stärker erwärmt wird.

In einer Variante der Erfindung ist ein Wärmetauscher im Kühlmittelkreislauf der Brennkraftmaschine unmittelbar nachfolgend zu der Brennkraftmaschine angeordnet. Wie bereits zuvor ausgeführt, ist die erfindungsgemäße Vorrichtung aufgrund der Lage des kritischen Punktes des Arbeitsmediums, wie z. B. Kohlenstoffdioxid, dazu in der Lage die im Kühlmittelkreislauf der Brennkraftmaschine enthaltene Brennwertenergie auch bei den dort vorliegenden Temperaturen von ca. 120° C bis 140° C zu nutzen.

Gemäß einer weiteren Variante der erfindungsgemäßen Vorrichtung ist ein Wärmetauscher im Bereich des Abgasstroms der Brennkraftmaschine angeordnet, vorzugsweise unmittelbar nachfolgend zu der Brennkraftmaschine. Der Wärmetauscher ist dabei beispielsweise im Abgasrohr der Brennkraftmaschine angeordnet, vorteilhafterweise unmittelbar nachfolgend zu der Brennkraftmaschine, da die Abgase der Brennkraftmaschine dort die höchstmögliche Brennwertenergie aufweisen.

In einer vorteilhaften Variante der Erfindung umfasst die Vorrichtung einen Arbeitsmediumkreislauf mit wenigstens zwei Wärmetauschern, wobei beispielsweise ein Wärmetauscher im Bereich der Brennkraftmaschine angeordnet ist und ein Wärmetauscher im Bereich des Abgasstroms der Brennkraftmaschine. Das in dem Arbeitsmediumkreislauf enthaltene Arbeitsmedium wird somit mittels zweier Wärmetauscher auf eine höchstmögliche Temperatur erhitzt, wodurch sich der Wirkungsgrad der erfindungsgemäßen Vorrichtung weiter erhöht. Nach einer zweckmäßigen Variante der erfindungsgemäßen Vorrichtung sind die Leitungen des Arbeitsmediumkreislaufs zwischen dem ersten Wärmetauscher und dem zweiten Wärmetauscher und nachfolgend zu den eventuell folgenden Wärmetauschern, zwischen dem letzten Wärmetauscher und der wenigstens einen Turbine, zwischen der wenigstens einen Turbine und dem wenigstens einen Kühler, zwischen dem wenigstens einem Kühler und dem wenigstens einem Kompressor und zwischen dem wenigstens einem Kompressor und dem ersten Wärmetauscher angeordnet. Bei der Verwendung eines Rekuperators ist dieser nach einer Variante der Erfindung im Arbeitsmediumkreislauf zwischen der wenigstens einen Turbine und dem wenigstens einen Kühler sowie zwischen dem wenigstens einem Kompressor und dem ersten Wärmetauscher angeordnet, zum Abkühlen des Arbeitsmediums zwischen der wenigstens einen Turbine und dem wenigstens einem Kühler und zum Erwärmen des Arbeitsmediums zwischen dem wenigstens einem Kompressor und dem ersten Wärmetauscher.

In einer alternativen Variante der Erfindung umfasst die erfindungsgemäße Vorrichtung zwei Arbeitsmediumkreisläufe, wobei in jedem Arbeitsmediumkreislauf jeweils ein Wärmetauscher angeordnet ist. Beispielsweise ist der erste Wärmetauscher des ersten Arbeitsmediumkreislaufs im Bereich der Brennkraftmaschine angeordnet und der zweite Wärmetauscher im zweiten Arbeitsmediumkreislauf im Bereich des Abgasstroms der Brennkraftmaschine angeordnet.

Zweckmäßigerweise sind die beiden Arbeitsmediumkreisläufe fluidtechnisch voneinander getrennt.

Nach einer bevorzugten Variante ist zwischen dem ersten Arbeitsmediumkreislauf und dem zweiten Arbeitsmediumkreislauf ein dritter Wärmetauscher angeordnet, welcher Wärme von dem Arbeitsmedium des ersten Arbeitsmediumkreislaufs auf das Arbeitsmedium des zweiten Arbeitsmediumkreislaufs überträgt, wobei der dritte Wärmetauscher so ausgebildet ist, dass der erste und der zweite Arbeitsmediumkreislauf fluidtechnisch voneinander getrennt sind. Dies hat den Vorteil, dass der erste und der zweite Arbeitsmediumkreislauf auf unterschiedlichen Wärmeniveaus betrieben werden können und die Wärme von dem wärmeren Arbeitsmediumkreislauf dazu verwendet werden kann, das Arbeitsmedium des kühleren Arbeitsmediumkreislauf zu erwärmen.

In einer weiteren Variante ist in dem zweiten Arbeitsmediumskreislauf ein Rekuperator zwischen der wenigstens einen Turbine und dem dritten Wärmetauscher und zwischen dem wenigstens einen Kompressor und dem zweiten Wärmetauscher angeordnet, um das Arbeitsmedium des zweiten Arbeitsmediumkreislaufs zwischen der wenigstens einen Turbine und dem dritten Wärmetauscher abzukühlen und das Arbeitsmedium des zweiten Arbeitsmediumkreislaufs zwischen dem wenigstens einem Kompressor und dem zweiten Wärmetauscher zu erwärmen.

In einer besonders zweckmäßigen Variante ist der wenigstens eine Wärmetauscher des ersten Arbeitsmediumkreislaufs im Bereich der Brennkraftmaschine angeordnet, vorzugsweise im Kühlmittelkreislauf der Brennkraftmaschine, insbesondere unmittelbar nachfolgend zu der Brennkraftmaschine und der wenigstens eine Wärmetauscher des zweiten Arbeitsmediumkreislauf ist im Bereich des Abgasstroms der Brennkraftmaschine angeordnet, vorzugsweise unmittelbar nachfolgend zu der Brennkraftmaschine. Die Aufgabe wird erfindungsgemäß weiterhin gelöst durch ein Verfahren zur Nutzung der Abwärme einer Brennkraftmaschine gemäß Anspruch 13, insbesondere zur Nutzung der Abwärme eines Fahrzeugmotors umfassend die Schritte, Erwärmen eines Arbeitsmediums mittels wenigstens eines Wärmetauschers, wobei der/die Wärmetauscher vorzugsweise im Bereich der Brennkraftmaschine und/oder im Bereich des Abgasstroms der Brennkraftmaschine angeordnet ist/sind; Antreiben einer mit einem Generator verbundenen Turbine mittels des erwärmten Arbeitsmediums, zur Erzeugung mechanischer oder elektrischer Energie; Abkühlen des Arbeitsmediums mittels eines Kühlers; Verdichten des Arbeitsmediums mittels eines Kompressors; wobei das Arbeitsmedium in einem Arbeitsmediumkreislauf fließt; dadurch gekennzeichnet, dass das Arbeitsmedium, vorzugsweise Kohlenstoffdioxid, Propan, Methanol oder Ethanol oder eine Mischung daraus, im gesamten Arbeitsmediumkreislauf in einem überkritischen/superkritischen Zustand ist. Beispielsweise wird dadurch das Arbeitsmedium Kohlenstoffdioxid durch den wenigstens einen Wärmetauscher auf eine Temperatur über 30,98° C erhitzt und mittels des Kompressors auf wenigstens 73,75 bar verdichtet, so dass Kohlenstoffdioxid in einem überkritischem/superkritischem Zustand vorliegt. Das überkritische/superkritische Kohlenstoffdioxid weist eine hohe Energiedichte auf, fließt mit der Viskosität eines Gases, wobei die Dichte des überkritischem/superkritischem Kohlenstoffdioxids mit Wasser vergleichbar ist.

Dies ermöglicht es, die Bauteile einer entsprechenden Vorrichtung extrem kompakt auszubilden und in ein Fahrzeug zu integrieren. Weiterhin ermöglicht die Lage des kritischen Punktes bei 30,98° C eine Nutzung der Abwärme einer Brennkraftmaschine bei niedrigen Ausgangstemperaturen. Das Arbeitsmedium ist im gesamten Arbeitsmediumkreislauf in einem überkritischen/superkritischen Zustand. In einer vorteilhaften Variante umfasst das erfindungsgemäße Verfahren weiterhin den Schritt des Übertragens eines Teils der Restwärme des Arbeitsmediums nach der wenigstens einen Turbine auf das Arbeitsmedium vor dem wenigstens einen Erwärmen des Arbeitsmediums mittels des wenigstens einem Wärmetrauschers, beispielsweise unter Verwendung mindestens eines Rekuperators. Dadurch, dass die Restwärme des Arbeitsmediums nach der wenigstens einen Turbine dazu verwendet wird, das Arbeitsmedium vor dem wenigsten einem Wärmetauscher vorzuwärmen, erhöht sich der Wirkungsgrad des erfindungsgemäßen Verfahrens, da das Arbeitsmedium in dem wenigstens einen Wärmetauscher stärker erhitzt werden kann.

Zweckmäßigerweise wird das erfindungsgemäße Verfahrens mittels einer vorbeschriebenen Vorrichtung ausgeführt. Nachfolgend wird die Erfindung anhand zweier in den Figuren dargestellten Ausführungsbeispielen näher erläutert. Es zeigen:
- Fig. 1:: eine schematische Ansicht einer erfindungsgemäßen Vorrichtung mit einem einfachen Arbeitsmediumkreislauf, und
- Fig. 2:: eine schematische Ansicht einer erfindungsgemäßen Vorrichtung mit zwei fluidtechnisch voneinander getrennten Arbeitsmediumkreisläufen.

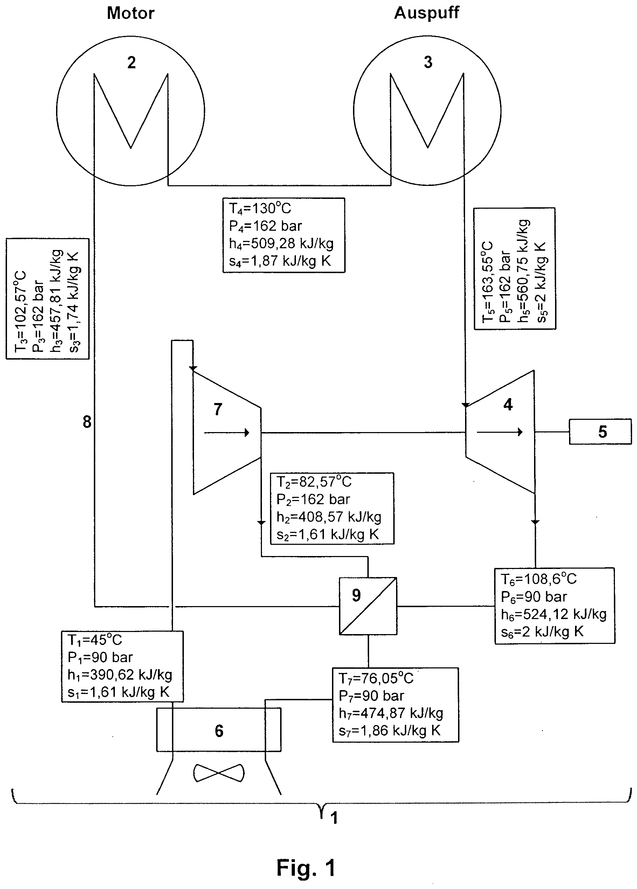

Figur 1 zeigt eine schematische Ansicht einer erfindungsgemäßen Vorrichtung 1 zur Nutzung der Abwärme einer Brennkraftmaschine, insbesondere zur Nutzung der Abwärme eines Fahrzeugmotors. Die Vorrichtung umfasst einen ersten Wärmetauscher 2 und einen zweiten Wärmetauscher 3, zur Übertragung der Abwärme der Brennkraftmaschine auf ein Arbeitsmedium. Der erste Wärmetauscher 2 ist dabei im Bereich der Brennkraftmaschine angeordnet, vorzugsweise im Kühlmittelkreislauf der Brennkräftmaschine, insbesondere unmittelbar nachfolgend zu der Brennkraftmaschine. Der zweite Wärmetauscher 3 ist im Bereich des Abwärmestroms der Brennkraftmaschine angeordnet, vorzugsweise unmittelbar nachfolgend zu der Brennkraftmaschine.

Die Vorrichtung 1 umfasst weiterhin eine mit einem Generator 5 verbundene Turbine 4 zur Erzeugung mechanischer oder elektrischer Energie, wobei die Turbine 4 mittels des Arbeitsmediums angetrieben wird.

Die Vorrichtung 1 gemäß Figur 1 umfasst weiterhin einen Kühler 6 zur Abkühlung des Arbeitsmediums und einen Kompressor 7, zum Verdichten des Arbeitsmediums.

Die zuvor genannten Einrichtungen der erfindungsgemäßen Vorrichtung 1 sind mittels eines Arbeitsmediumkreislaufs 8 mit Leitungen für das Arbeitsmedium miteinander verbunden.

Die erfindungsgemäße Vorrichtung 1 zeichnet sich dadurch aus, dass das Arbeitsmedium, vorzugsweise Kohlenstoffdioxid, Propan, Methanol oder Ethanol oder eine Mischung daraus, wenigstens teilweise in einem überkritischen/superkritischen Zustand ist. Beispielsweise weist Kohlenstoffdioxid in einem überkritischem/superkritischem Zustand eine hohe Energiedichte auf, wobei die Dichte des überkritischen/superkritischen Kohlenstoffdioxids mit der Dichte von Wasser vergleichbar ist, jedoch mit der Viskosität eines Gases. Weiterhin ist eine durch überkritisches/superkritisches Kohlenstoffdioxid angetriebene Wärmemaschine nicht mehr von einem Phasenwechsel abhängig, wie es bei mit Wasserdampf betriebenen sekundären Wärmemaschinen der Fall ist. Die vorgenannten Eigenschaften des überkritischen/superkritischen Kohlenstoffdioxids erlauben es, die erfindungsgemäße Vorrichtung 1 extrem kompakt zu bauen und in ein reales Auto zu integrieren, beispielsweise ist der Durchmesser der Leitungen des Arbeitsmittelkreislaufs 8 für ein 103 PS starken Dieselmotor mit einem Abwärmestrom von ca. 200 kW lediglich 6 mm. Vorzugsweise ist das Arbeitsmedium wenigstens im Bereich zwischen dem Kompressor 7 und den Wärmetauschern 2, 3, in einem überkritischen/superkritischen Zustand, besonders bevorzugt im gesamten Arbeitsmediumkreislauf 8.

Weiterhin hat die Verwendung eines überkritischen/superkritischen Arbeitsmediums den Vorteil, dass auch bei relativ niedrigen Temperaturen des Abwärmestroms der Brennkraftmaschine die Abwärmeenergie genutzt werden kann. So liegt beispielsweise der kritische Punkt von Kohlenstoffdioxid bei 30,98° C und 73,75 bar, wodurch die Abwärmeenergie die Brennkraftmaschine bei relativ niedrigen Temperaturen des Abwärmestroms der Brennkraftmaschine nutzbar ist.

Die Vorrichtung 1 gemäß Figur 1 umfasst weiterhin einen Rekuperator 9, welcher Wärme von einem zu kühlenden Fluidstrom auf einen zu erwärmenden Fluidstrom überträgt. Der Rekuperator 9 aus Figur 1 kühlt das Arbeitsmedium nach der Turbine 4 ab und erwärmt das Arbeitsmedium vor dem ersten Wärmetauscher 12. Somit wird die Restwärme des Arbeitsmediums nach der Turbine 4 dazu genutzt, dass Arbeitsmedium vor dem ersten Wärmetauscher 2 vorzuwärmen, so dass das Arbeitsmedium durch den ersten Wärmetauscher 2 stärker erhitzt wird.

Die Leitungen des Arbeitsmediumkreislaufs 8 sind zwischen dem ersten Wärmetauscher 2 und dem zweiten Wärmetauscher 3, zwischen dem zweiten Wärmetauscher 3 und der Turbine 4, zwischen der Turbine 4 und dem Rekuperator 9, zwischen dem Rekuperator 9 und dem Kühler 6, zwischen den Kühler 6 und dem Kompressor 7, zwischen dem Kompressor 7 und dem Rekuperator 9, und zwischen dem Rekuperator 9 und dem ersten Wärmetauscher 2 angeordnet.

Die Vorrichtung 1 gemäß Figur 1 weist somit einen einfachen Arbeitsmediumkreislauf 8 auf.

Nachfolgend wird das erfindungsgemäße Verfahren zur Nutzung der Abwärme einer Brennkraftmaschine, insbesondere zur Nutzung der Abwärme eines Fahrzeugmotors, anhand der in der Vorrichtung 1 gemäß Figur 1 vorherrschenden Temperaturen, Drücke, und Enthalpien näher erläutert. Das Arbeitsmedium in dem Arbeitsmediumkreislauf 8 zwischen dem Kühler 6 und dem Kompressor 7 hat eine Temperatur von 45° C, steht unter einem Druck von 90 bar und weist eine Enthalpie von 390,62 kJ/kg auf.

Durch den Kompressor 7 wird das Arbeitsmedium in dem Arbeitsmediumkreislauf 8 verdichtet, wodurch die Temperatur auf 82,57° C bei einem Druck von 163 bar steigt, so dass die Enthalpie 408,57 kJ/kg beträgt.

Nachfolgend wird das Arbeitsmedium in den Arbeitsmediumkreislauf 8 durch den Rekuperator 9 erwärmt, so dass das Arbeitsmedium zwischen dem Rekuperator 9 und dem ersten Wärmetauscher 2 eine Temperatur von 102,57° C bei einem Druck von 162 bar aufweist, wodurch die Enthalpie auf 457,81 kJ/kg steigt.

Durch den im Bereich der Brennkraftmaschine angeordneten ersten Wärmetauscher 2 wird das Arbeitsmedium in dem Arbeitsmediumkreislauf 8 auf 130° C bei 162 bar erhitzt, woraus sich eine Enthalpie von 509,28 kJ/kg ergibt. Nachfolgend wird das Arbeitsmedium in dem Arbeitsmediumkreislauf 8 durch den im Bereich des Abgasstroms der Brennkraftmaschine angeordneten zweiten Wärmetauscher 3 auf 163,55° C bei 162 bar erhitzt, so dass die Enthalpie gleich 560,75 kJ/kg ist.

Nach dem zweiten Wärmetauscher 3 wird das Arbeitsmedium zu der mit dem Generator 5 verbundenen Turbine 4 geleitet, zur Erzeugung mechanischer oder elektrischer Energie. Nach dem Austritt aus der Turbine 4 hat das Arbeitsmedium eine Temperatur von 108° C bei einem Druck von 90 bar, woraus sich eine Enthalpie von 524,12 kJ/kg ergibt.

Das aus der Turbine 4 austretende Arbeitsmedium wird mittels des Rekuperators 9 dazu verwendet, das Arbeitsmedium zwischen dem Kompressor 7 und dem ersten Wärmetauscher 2 zu erwärmen, wodurch das Arbeitsmedium vor dem Kühler 6 abgekühlt wird. Der Rekuperator 9 weist dabei keine Fluidverbindung zwischen dem abzukühlenden Fluidstrom und dem aufzuwärmenden Fluidstrom auf. Nach dem Austritt aus dem Rekuperator 9 weist das abgekühlte Arbeitsmedium eine Temperatur von 76,05° C bei 90 bar auf, sowie eine Enthalpie von 474,87 kJ/kg und eine spezifische Wärmekapazität von 1,86 kJ(kg*K).

In einem letzten Schritt wird das Arbeitsmedium des Arbeitsmediumkreislaufs 8 mittels des Kühlers 6 abgekühlt, wobei das Arbeitsmedium beim Austritt aus dem Kühler 6 eine Temperatur von 45° C bei 90 bar aufweist, wobei die Enthalpie gleich 390,62 kJ/kg ist. Das so abgekühlte Arbeitsmedium des Arbeitsmediumkreislaufs 8 wird erneut dem Kompressor 7 zugeführt.

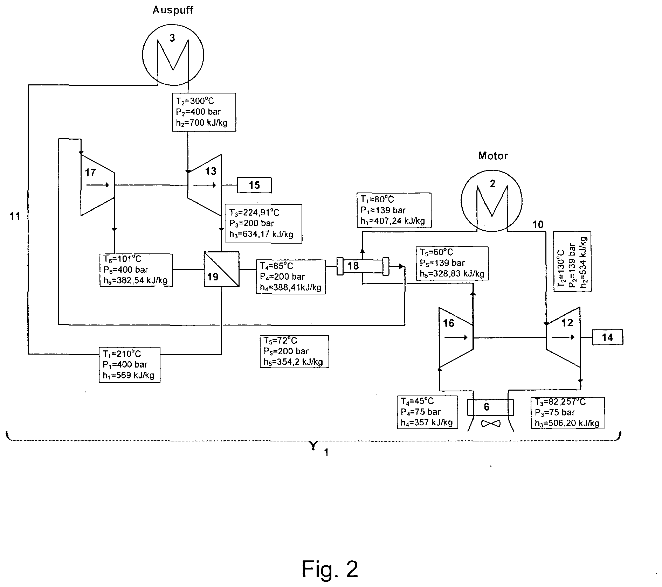

Die erfindungsgemäße Vorrichtung 1 gemäß Figur 2 weist im Gegensatz zu der Vorrichtung 1 aus Figur 1 einen ersten Arbeitsmediumkreislauf 10 und einen zweiten Arbeitsmediumkreislauf 11 auf, wobei die beiden Arbeitsmediumkreisläufe 10, 11 fluidtechnisch voneinander getrennt sind.

Der erste Arbeitsmediumkreislauf 10 umfasst einen ersten Wärmetauscher 2, welcher im Bereich der Brennkraftmaschine angeordnet ist, beispielsweise im Kühlmittelkreislauf der Brennkraftmaschine, insbesondere unmittelbar nachfolgend zu der Brennkraftmaschine.

Der erste Arbeitsmediumkreislauf 10 aus Figur 2 umfasst weiterhin eine mit einem ersten Generator 14 verbundene erste Turbine 12, einen Kühler 6 sowie einen ersten Kompressor 16 auf. Die mit dem ersten Generator 14 verbundene erste Turbine 12 dient dabei zur Erzeugung mechanischer oder elektrischer Energie, wobei die erste Turbine 12 mittels des Arbeitsmediums des ersten Arbeitsmediumkreislaufs 10 angetrieben wird. Nachfolgend zu der ersten Turbine 12 wird das Arbeitsmedium in dem ersten Arbeitsmediumkreislauf 10 mittels des Kühlers 6 abgekühlt und nachfolgend zu dem Kühler 6 durch den ersten Kompressor 16 verdichtet.

Zwischen dem ersten Kompressor 16 und dem ersten Wärmetauscher 2 ist dritter Wärmetauscher 18 angeordnet, um das Arbeitsmedium in dem ersten Arbeitsmediumkreislauf 10 zwischen dem ersten Kompressor 16 und dem ersten Wärmetauscher 2 zu erwärmen.

Der fluidtechnisch von dem ersten Arbeitsmediumkreislauf 10 getrennte zweite Arbeitsmediumkreislauf 11 umfasst einen zweiten Wärmetauscher 3, welcher im Bereich des Abgasstroms der Brennkraftmaschine angeordnet ist, vorzugsweise unmittelbar nachfolgend zu der Brennkraftmaschine.

Der zweite Arbeitsmediumkreislauf 11 umfasst weiterhin eine mit einem zweiten Generator 15 verbundene zweite Turbine 13 zur Erzeugung mechanischer oder elektrischer Energie, wobei die zweite Turbine 13 mittels des Arbeitsmediums in dem zweiten Arbeitsmediumkreislauf 11 angetrieben wird.

Der zweite Arbeitsmediumkreislauf 11 weist nachfolgend zu der zweiten Turbine 13 einen Rekuperator 19 auf, wobei der Rekuperator 19 das Arbeitsmedium in dem zweiten Arbeitsmediumkreislauf 11 nachfolgend zu der zweiten Turbine 13 abkühlt und das Arbeitsmedium zwischen einem zweiten Kompressor 17 und dem zweiten Wärmetauscher 3 erhitzt. Das mittels des Rekupertors 19 abgekühlte Arbeitsmedium im zweiten Arbeitmediumkreislauf wird nachfolgend dem dritten Wärmetauscher 18 zugeführt, wobei die Temperatur des Arbeitsmediums des zweiten Arbeitsmediumkreislaufs beim Eintritt in den dritten Wärmetauscher 18 höher ist, als die Temperatur des Arbeitsmediums in dem ersten Arbeitsmediumkreislauf 10 im Bereich des dritten Wärmetauschers 18. Das Arbeitsmedium im ersten Arbeitsmediumkreislauf 10 wird somit vor dem ersten Wärmetauscher 2 mittels des Arbeitsmediums in dem zweiten Arbeitsmediumkreislauf 11 durch den dritten Wärmetauscher 18 vorgewärmt.

Das Arbeitsmedium des zweiten Arbeitsmediumkreislaufs 11 wird nach dem Austritt aus dem dritten Wärmetauscher 18 dem zweiten Kompressor 17 zugeführt, zum Verdichten des Arbeitsmediums in dem zweiten Arbeitsmediumkreislauf 11.

Das aus dem zweiten Kompressor 17 austretende Arbeitsmedium des Arbeitsmediumkreislaufs 11 wird mittels des Rekuperators 19 vorgewärmt und dem zweiten Wärmetauscher 3 zugeführt.

Nachfolgend wird die Wirkungsweise der erfindungsgemäßen Vorrichtung 1 gemäß Figur 2 anhand der in der Vorrichtung 1 vorherrschenden Temperaturen, Drücke und Enthalpiewerte näher erläutert. Vor dem Eintritt in den ersten Wärmetauscher 2 weist das Arbeitsmedium des ersten Arbeitsmediumkreislaufs 10 eine Temperatur von 80° C auf, steht unter einem Druck von 139 bar und hat eine Enthalpie von 407,24 kJ/kg. Durch den ersten Wärmetauscher 2 wird das Arbeitsmedium 2 in dem ersten Arbeitsmediumkreislauf 10 auf 130° C erhitzt, steht unter einem Druck von 139 bar und hat eine Enthalpie von 354 kJ/kg. Das durch den ersten Wärmetauscher 2 erhitzte Arbeitsmedium treibt die erste Turbine 12 an, welche mit dem ersten Generator 14 verbunden ist, zur Erzeugung mechanischer oder elektrischer Energie.

Nach dem Austritt aus der ersten Turbine 12 hat das Arbeitsmedium des ersten Arbeitsmediumkreislaufs eine Temperatur von 82,257° C, steht unter einem Druck von 75 bar und weist eine Enthalpie von 506,20 kJ/kg auf, welches nachfolgend durch den Kühler 6 auf eine Temperatur von 45° C bei 75 bar abgekühlt wird, wobei die Enthalpie gleich 357 kJ/kg ist.

Das so abgekühlte Arbeitsmedium des ersten Arbeitsmediumkreislaufs 10 wird mittels des ersten Kompressors 16 verdichtet, wobei das Arbeitsmedium des ersten Arbeitsmediumkreislaufs 10 beim Austritt aus dem ersten Kompressor 16 eine Temperatur von 60° C hat, unter einen Druck von 139 bar steht und eine Enthalpie von 328,83 kJ/kg aufweist.

Das Arbeitsmedium des ersten Arbeitsmediumkreislaufs 10 wird nachfolgend durch den dritten Wärmetauscher 18 erhitzt, auf eine Temperatur von 80° C bei 139 bar und einer Enthalpie von 407,24 kJ/(kg*K), wobei das so erhitzte Arbeitsmedium des ersten Arbeitsmediumkreislaufs 10 erneut dem ersten Wärmetauscher 2 zugeführt wird.

Das Arbeitsmedium des zweiten Arbeitsmediumkreislaufs 11 hat vor dem Eintritt in den zweiten Wärmetauscher 3 eine Temperatur von 210° C, steht unter einem Druck von 400 bar und weist eine Enthalpie von 569 kJ/kg auf. Das Arbeitsmedium des zweiten Arbeitsmediumkreislaufs 11 wird durch den zweiten Wärmetauscher 3 auf 300° C bei 400 bar erhitzt, so dass die Enthalpie auf 700 kJ/(kg*K) steigt.

Das durch den zweiten Wärmetauscher 3 erhitzte Arbeitsmedium des zweiten Arbeitsmeidumkreislaufs 11 treibt die mit dem zweiten Generator 15 verbundene zweite Turbine 13 an, wobei das Arbeitsmedium des zweiten Arbeitsmediumkreislaufs 11 nach dem Austritt aus der zweiten Turbine 13 eine Temperatur von 224,91° C hat, unter einem Druck von 220 bar steht und eine Enthalpie von 634,17 kJ/kg aufweist.

Nach dem Austritt aus der zweiten Turbine 13 wird das Arbeitsmedium des zweiten Arbeitsmediumkreislaufs 11 dem Rekuperator 19 zugeführt, durch welchen das Arbeitsmedium des zweiten Arbeitsmediumkreislaufs 11 auf 85° C abgekühlt wird, bei einem Druck von 200 bar und einer sich daraus ergebenden Enthalpie von 388,41 kJ/kg. Nach dem Austritt aus dem Rekuperator 19 wird das Arbeitsmedium des zweiten Arbeitsmediumkreislaufs 11 nachfolgend dem dritten Wärmetauscher 18 zugeführt, welcher das Arbeitsmedium des ersten Arbeitsmediumkreislaufs 10 zwischen dem ersten Kompressor 16 und dem ersten Wärmetauscher 2 erhitzt. Dadurch wird das Arbeitsmedium des zweiten Arbeitsmediumkreislaufs 11 mittels des dritten Wärmetauschers 18 auf 72° C abgekühlt, bei einem Druck von 200 bar und einer Enthalpie von 354 kJ/kg.

Das mittels des dritten Wärmetauschers 19 und des Rekuperators 18 abgekühlte Arbeitsmedium des zweiten Abreitsmediumkreislaufs 11 wird nachfolgend dem zweiten Kompressor 17 zugeführt, welcher das Arbeitsmedium des zweiten Arbeitsmediumkreislaufs 11 verdichtet.

Nach dem Austritt aus dem zweiten Kompressor 17 weist das Arbeitsmedium des zweiten Arbeitsmediumkreislaufs 11 eine Temperatur von 100° C , einen Druck von 400 bar und eine Enthalpie von 382,54 kJ/kg auf und wird dem Rekuperator 19 zum Erhitzen zugeführt.

Der Rekuperator 19 erhitzt das Arbeitsmedium des zweiten Arbeitsmediumkreislaufs 11 auf 210° C, bei einem Druck von 400 bar und eine Enthalpie von 569 kJ/kg, wobei das Arbeitsmedium des zweiten Arbeitsmediumkreislaufs 11 nach dem Erhitzen durch den Rekuperator 19 dem zweiten Wärmetauscher 3 zugeführt wird.

In den beiden zuvor beschriebenen Ausführungsbeispielen der erfindungsgemäßen Vorrichtung 1 ist das Arbeitsmedium Kohlenstoffdioxid in einem überkritischen/superkritischem Zustand. Dies ergibt sich daraus, dass überall in der erfindungsgemäßen Vorrichtung die Temperatur und der Druck oberhalb des kritischen Punkts von Kohlenstoffdioxid liegt, wobei der kritische Punkt von Kohlenstoffdioxid bei 30,98° C und 73,75 bar liegt. Aus der Verwendung von Kohlenstoffdioxid in einem überkritischen/superkritischen Zustand ergeben sich die zuvor genannten Vorteile, so dass die erfindungsgemäßen Vorrichtungen 1 derart kompakt ausgebildet werden können, dass sie in ein Fahrzeug integrierbar sind.

### Bezugzeichenliste:

- 1: Vorrichtung
- 2: erster Wärmetauscher
- 3: zweiter Wärmetauscher
- 4: Turbine
- 5: Generator
- 6: Kühler
- 7: Kompressor
- 8: Arbeitsmediumkreislauf
- 9: Rekuperator
- 10: erster Arbeitsmediumkreislauf
- 11: zweiter Arbeitsmediumkreislauf
- 12: erste Turbine
- 13: zweite Turbine
- 14: erster Generator
- 15: zweiter Generator
- 16: erster Kompressor
- 17: zweiter Kompressor
- 18: Rekuperator
- 19: dritter Wärmetauscher

## Patentansprüche

1. Vorrichtung (1) zur Nutzung der Abwärme einer Brennkraftmaschine, insbesondere zur Nutzung der Abwärme eines Fahrzeugmotors, umfassend:
wenigstens einen Wärmetauscher (2, 3) zur Übertragung der Abwärme der Brennkraftmaschine auf ein Arbeitsmedium;
wenigstens eine mit einem Generator (5, 14, 15) verbundene Turbine (4, 12, 13) zur Erzeugung mechanischer oder elektrischer Energie, wobei die Turbine (4, 12, 13) mittels des Arbeitsmediums angetrieben wird;
wenigstens einen Kühler (6) zur Abkühlung des Arbeitsmediums;
wenigstens einen Kompressor (7, 16, 17) zum Verdichten des Arbeitsmediums; und
wenigstens einen Arbeitsmediumkreislauf (8, 10, 11) mit Leitungen für das Arbeitsmedium
das Arbeitsmedium, vorzugsweise Kohlenstoffdioxid, Propan, Methanol oder Ethanol oder eine Mischung daraus, im gesamten Arbeitsmediumkreislauf (8, 10, 11) in einem überkritischen/superkritischen Zustand ist,
**dadurch gekennzeichnet, dass**
der Wärmetaucher (2) im Kühlmittelkreislauf der Brennkraftmaschine angeordnet ist.

2. Vorrichtung (1) nach einem Anspruch 1, weiterhin umfassend wenigstens einen Rekuperator (9, 18, 19), welcher Wärme von einem zu kühlenden Fluidstrom auf einen zu erwärmenden Fluidstrom überträgt, wobei der Rekuperator (9, 18, 19) beispielsweise das Arbeitsmedium nach der wenigstens einen Turbine (4, 13) abkühlt und das Arbeitsmedium vor dem wenigstens einen Wärmetauscher (2, 3) erwärmt.

3. Vorrichtung (1) nach Anspruch 1 oder 2, **dadurch gekennzeichnet, dass** der Wärmetaucher (2) unmittelbar nachfolgend zu der Brennkraftmaschine angeordnet ist.

4. Vorrichtung (1) nach einem der Ansprüche 1 bis 3, **dadurch gekennzeichnet, dass** ein Wärmetauscher (3) im Bereich des Abgasstroms der Brennkraftmaschine angeordnet ist, vorzugsweise unmittelbar nachfolgend zu der Brennkraftmaschine.

5. Vorrichtung (1) nach einem Ansprüche 1 bis 4, **dadurch gekennzeichnet, dass** wenigstens zwei Wärmetauscher (2, 3) in einem Arbeitsmediumkreislauf (8) angeordnet sind.

6. Vorrichtung (1) nach Anspruch 5 **dadurch gekennzeichnet, dass** die Leitungen des Arbeitsmediumkreislauf (8) angeordnet sind zwischen dem ersten Wärmetauscher (2) und dem zweiten Wärmetauscher (3) und nachfolgend zu den eventuell folgenden Wärmetauschern, zwischen dem letzten Wärmetauscher (3) und der wenigstens einen Turbine (4), zwischen der wenigstens einen Turbine (4) und dem wenigstens einen Kühler (6), zwischen dem wenigstens einen Kühler (6) und dem wenigstens einem Kompressor (7) und zwischen dem wenigstens einen Kompressor (7) und dem ersten Wärmetauscher (2).

7. Vorrichtung (1) nach Anspruch 6, **dadurch gekennzeichnet, dass** ein Rekuperator (9) im Arbeitsmediumkreislauf (8) zwischen der wenigstens einen Turbine (4) und dem wenigstens einen Kühler (6) sowie zwischen dem wenigstens einen Kompressor (7) und dem wenigstens einen Wärmetauscher (2) angeordnet ist, zum Abkühlen des Arbeitsmediums zwischen der wenigstens einen Turbine (4) und dem wenigstens einen Kühler (6) um zum Erwärmen des Arbeitsmediums zwischen dem wenigstens einen Kompressor (7) und dem ersten Wärmetauscher (2).

8. Vorrichtung (1) nach einem der Ansprüche 1 bis 4, umfassend zwei Arbeitsmediumkreisläufe (10, 11), wobei in jedem Arbeitsmediumkreislauf (10, 11) jeweils ein Wärmetauscher (1, 3) angeordnet ist.

9. Vorrichtung (1) nach Anspruch 8, **dadurch gekennzeichnet, dass** die beiden Arbeitsmediumkreisläufe (10, 11) fluidtechnisch voneinander getrennt sind.

10. Vorrichtung (1) nach Anspruch 8 oder 9 **dadurch gekennzeichnet, dass** zwischen dem ersten Arbeitsmediumkreislauf (10) und dem zweiten Arbeitsmediumkreislauf (11) ein dritter Wärmetauscher (18) angeordnet ist, welcher Wärme von dem Arbeitsmediumkreislauf des ersten Arbeitsmediumkreislaufs (10) auf das Arbeitsmedium des zweiten Arbeitsmediumkreislaufs (11) überträgt, wobei der dritte Wärmetauscher (18) so ausgebildet ist, dass der erste und der zweite Arbeitsmediumkreislauf (10, 11) fluidtechnisch voneinander getrennt sind.

11. Vorrichtung (1) nach Anspruch 10, **dadurch gekennzeichnet, dass** in dem zweiten Arbeitsmediumskreislauf (11) ein Rekuperator (19) zwischen der wenigstens einen Turbine (13) und dem dritten Wärmetauscher (18) und zwischen dem wenigstens einen Kompressor (17) und dem zweiten Wärmetauscher (3) angeordnet ist, um das Arbeitsmedium des zweiten Arbeitsmediumkreislaufs (11) zwischen der wenigstens einen Turbine (13) und dem dritten Wärmetauscher (3) abzukühlen und das Arbeitsmedium des zweiten Arbeitsmediumkreislaufs (11) zwischen dem wenigstens einem Kompressor (17) und dem zweiten Wärmetauscher (3) zu erwärmen.

12. Vorrichtung (1) nach einem der Ansprüche 8 bis 11, **dadurch gekennzeichnet, dass** der wenigstens eine Wärmetauscher (2) des ersten Arbeitsmediumkreislaufs (10) im Bereich der Brennkraftmaschine angeordnet ist, vorzugsweise in Kühlmittelkreislauf der Brennkraftmaschine, insbesondere unmittelbar nachfolgend zu der Brennkraftmaschine und dass der wenigstens eine Wärmetaucher (3) des zweiten Arbeitsmediumkreislaufs (11) im Bereich des Abgasstroms der Brennkraftmaschine angeordnet ist, vorzugsweise unmittelbar nachfolgend zu der Brennkraftmaschine.

13. Verfahren zur Nutzung der Abwärme einer Brennkraftmaschine, insbesondere zur Nutzung der Abwärme eines Fahrzeugmotors umfassend die Schritte:
Erwärmen eines Arbeitsmediums mittels wenigstens eines Wärmetauschers (2, 3), wobei der/die Wärmetauscher (2, 3) vorzugsweise im Bereich der Brennkraftmaschine und/oder im Bereich des Abgasstroms der Brennkraftmaschine angeordnet ist/sind;
Antreiben einer mit einem Generator (5, 14, 15) verbundenen Turbine (4, 12, 13) mittels des erwärmten Arbeitsmediums, zur Erzeugung mechanischer oder elektrischer Energie;
Abkühlen des Arbeitsmediums mittels eines Kühlers (6);
Verdichten des Arbeitsmediums mittels eines Kompressors (7, 16, 17);
wobei das Arbeitsmedium in einem Arbeitsmediumkreislauf (8, 10, 11) steht;
wobei das Arbeitsmedium, vorzugsweise Kohlenstoffdioxid, Propan, Methanol oder Ethanol oder eine Mischung daraus, im gesamten Arbeitsmediumkreislauf (8, 10, 11) in einem überkritischen/superkritischen Zustand ist,
**dadurch gekennzeichnet, dass**
der Wärmetaucher (2) im Kühlmittelkreislauf der Brennkraftmaschine angeordnet ist.

14. Verfahren nach Anspruch 13, weiterhin umfassend den Schritt des Übertragens eines Teils der Restwärme des Arbeitsmediums nach der wenigstens einen Turbine (4, 12, 13) auf das Arbeitsmedium vor dem wenigstens einen Erwärmen des Arbeitsmediums mittels des wenigstens einen Wärmetauschers (2, 3) beispielsweise unter Verwendung wenigstens eines Rekuperators (9, 18, 19).

15. Verfahren nach Anspruch 13 oder 14, **dadurch gekennzeichnet, dass** das Verfahren mittels einer Vorrichtung (1) gemäß einem der Ansprüche 1 bis 10 ausgeführt wird.

## Claims

1. Device (1) for utilizing waste heat of a combustion engine, particularly for utilizing the waste heat of a vehicle engine, comprising:
at least one heat exchanger (2, 3) to transfer the waste heat from a combustion engine to a working medium;
at least one turbine (4, 12, 13) connected to a generator (5, 14, 15) for generating mechanical or electrical energy, wherein the turbine (4, 12, 13) is driven by the working medium;
at least one cooler (6) for cooling the working medium;
at least one compressor (7, 16, 17) for compressing the working medium; and
at least one working medium circuit (8, 10, 11) with pipes for the working medium,
wherein the working medium, preferably carbon dioxide, propane, methanol or ethanol or a mixture of these fluids, is in the whole working medium circuit (8, 10, 11) in a hypercritical/supercritical state,
**characterized in that**
the heat exchanger (2) is arranged in the coolant circuit of the combustion engine.

2. Device (1) according to claim 1, further comprising at least one recuperator (9, 18, 19), which transfers heat from a fluid flow to be cooled to a fluid flow to be heated, wherein the recuperator (9, 18, 19) for example cools the working medium after the turbine (4, 13) and heats the working medium prior to the heat exchanger (2, 3).

3. Device (1) according to claim 1 or claim 2, **characterized in that** the heat exchanger (2) is located directly downstream of the combustion engine.

4. Device (1) according to one of claims 1 to 3, **characterized in that** the heat exchanger (3) is located in the area of the exhaust stream of the combustion engine, preferably directly downstream of the combustion engine.

5. Device (1) according to one of claims 1 to 4, **characterized in that** at least two heat exchangers (2, 3) are arranged in the working medium circuit (8).

6. Device (1) according to claim 5, **characterized in that** the pipes of working medium circuit (8) are arranged between the first heat exchanger (2) and the second heat exchanger (3) and afterwards to eventually following heat exchangers, between the last heat exchanger (3) and the at least one turbine (4), between the at least one turbine (4) and the at least one cooler (6), between the at least one cooler (6) and the at least one compressor (7) and between the at least one compressor (7) and the first heat exchanger (2).

7. Device (1) according to claim 6, **characterized in that** a recuperator (9) is arranged in the working medium circuit (8) between the at least one turbine (4) and the at least one cooler (6) as well as between the at least one compressor 87) and the at least one heat exchanger (2), for cooling the working medium between the at least one turbine (4) and the at least one cooler (6) and heating the working medium between the at least one compressor (7) and the first heat exchanger (2).

8. Device (1) according to one of claims 1 to 4, comprising two working medium circuits (10, 11), wherein in each working medium circuit (10, 11) a heat exchanger (1, 3) is arranged.

9. Device (1) according to claim 8, **characterized in that** the two working medium circuits (10, 11) are fluidly separated from each other.

10. Device (1) according to claim 8 or 9, **characterized in that** between the first working medium circuit (10) and the second working medium circuit (11) a third heat exchanger (18) is arranged, which transfers heat from the working medium of the first working medium circuit (10) to the working medium of the second working medium circuit (11), wherein the third heat exchanger (18) is built in such a way, that the first and second working medium circuits (10, 11) are fluidly separated from each other.

11. Device (1) according to claim 10, **characterized in that** in the second working medium circuit (11) a recuperator (19) is arranged between the at least one turbine (13) and the third heat exchanger (18) and between the at least one compressor (17) and the second heat exchanger (3), to cool the working medium of the second working medium circuit (11) between the at least one turbine (13) and the third heat exchanger (18) and to heat the working medium of the second working medium circuit (11) between the at least one compressor (17) and the second heat exchanger (3).

12. Device (1) according to one of claims 8 to 11, **characterized in that** the at least one heat exchanger (2) of the first working medium circuit (10) is located in the area of the combustion engine, preferably in the coolant circuit of the combustion engine, particularly directly downstream of the combustion engine and that the at least one heat exchanger (3) of the second working medium circuit (11) is located in the area of the exhaust stream of the combustion engine, preferably directly downstream of the combustion engine.

13. Method for using the waste heat of a combustion engine, in particular for utilizing the waste heat of a vehicle engine, comprising the steps of:
heating a working medium by means of at least one heat exchanger (2, 3), wherein the heat exchanger/s (2, 3) is/are preferably disposed in the region of the combustion engine and/or in the region of the exhaust gas stream of the combustion engine;
powering a turbine (4, 12, 13) connected to a generator (5, 14, 15) by means of the working medium to generate mechanical or electrical power;
cooling of the working medium by means of a cooler (6);
compressing the working medium by means of a compressor (7, 16, 17);
wherein the working medium flows in a working medium circuit (8, 10, 11);
wherein the working medium, preferably carbon dioxide, propane, methanol or ethanol or a mixture of these fluids, is in the whole working medium circuit (8, 10, 11) in a hypercritical/supercritical state,
**characterized in that**
the heat exchanger (2) is arranged in the coolant circuit of the combustion engine.

14. Method according to claim 13, further comprising the step of transferring a part of residual heat of the working medium after the turbine (4, 12, 13) to a working medium before the at least one heating one the working medium by means of the at least one heat exchanger (2, 3), for example by using at least one recuperator.

15. Method according to claim 13 or 14, **characterized in that** the method is performed by means of a device (1) according to one of claims 1 to 10.

## Revendications

1. Dispositif (1) d'utilisation de la chaleur perdue d'un moteur à combustion, particulièrement pour l'utilisation de la chaleur perdue d'un moteur de véhicule, comprenant :
au moins un échangeur de chaleur (2, 3) permettant de transférer la chaleur perdue d'un moteur à combustion à un milieu de travail ;
au moins une turbine (4, 12, 13) connectée à un générateur (5, 14, 15) permettant de générer une énergie électrique ou mécanique, la turbine (4, 12, 13) étant entraînée par le milieu de travail ;
au moins un refroidisseur (6) permettant de refroidir le milieu de travail ;
au moins un compresseur (7, 16, 17) permettant de compresser le milieu de travail ; et
au moins un circuit (8, 10, 11) de milieu de travail pourvu de tuyaux pour le milieu de travail,
le milieu de travail, de préférence le dioxyde de carbone, le propane, le méthanol ou l'éthanol ou un mélange de ces fluides, étant dans la totalité du circuit (8, 10, 11) de milieu de travail dans un état hypercritique/supercritique,
**caractérisé en ce que**
l'échangeur de chaleur (2) est disposé dans le circuit de refroidissement du moteur à combustion.

2. Dispositif (1) selon la revendication 1, comprenant en outre au moins un récupérateur (9, 18, 19), qui transfère la chaleur d'un flux de fluide à refroidir à un flux de fluide à chauffer, le récupérateur (9, 18, 19) par exemple refroidit le milieu de travail après la turbine (4, 13) et chauffe le milieu de travail avant l'échangeur de chaleur (2, 3).

3. Dispositif (1) selon la revendication 1 ou la revendication 2, **caractérisé en ce que** l'échangeur de chaleur (2) est situé directement en aval du moteur à combustion.

4. Dispositif (1) selon l'une des revendications 1 à 3, **caractérisé en ce que** l'échangeur de chaleur (3) est situé dans la zone du flux d'échappement du moteur à combustion, de préférence directement en aval du moteur à combustion.

5. Dispositif (1) selon l'une des revendications 1 à 4, **caractérisé en ce qu'**au moins deux échangeurs de chaleur (2, 3) sont disposés dans le circuit (8) de milieu de travail.

6. Dispositif (1) selon la revendication 5, **caractérisé en ce que** les tuyaux du circuit (8) de milieu de travail sont disposés entre le premier échangeur de chaleur (2) et le deuxième échangeur de chaleur (3) et ensuite, à la suite des échangeurs de chaleur suivants, entre le dernier échangeur de chaleur (3) et l'au moins une turbine (4), entre l'au moins une turbine (4) et l'au moins un refroidisseur (6), entre l'au moins un refroidisseur (6) et l'au moins un compresseur (7) et entre l'au moins un compresseur (7) et le premier échangeur de chaleur (2).

7. Dispositif (1) selon la revendication 6, **caractérisé en ce qu'**un récupérateur (9) est disposé dans le circuit (8) de milieu de travail entre l'au moins une turbine (4) et l'au moins un refroidisseur (6) ainsi qu'entre l'au moins un compresseur (87) et l'au moins un échangeur de chaleur (2), pour refroidir le milieu de travail entre l'au moins une turbine (4) et l'au moins un refroidisseur (6) et chauffant le milieu de travail entre l'au moins un compresseur (7) et le premier échangeur de chaleur (2).

8. Dispositif (1) selon l'une des revendications 1 à 4, comprenant deux circuits (10, 11) de milieu de travail, un échangeur de chaleur (1, 3) étant disposé dans chaque circuit (10, 11) de milieu de travail.

9. Dispositif (1) selon la revendication 8, **caractérisé en ce que** les deux circuits (10, 11) de milieu de travail sont séparés de manière fluidique l'un de l'autre.

10. Dispositif (1) selon la revendication 8 ou 9, **caractérisé en ce qu'**entre le premier circuit (10) de milieu de travail et le second circuit (11) de milieu de travail, un troisième échangeur de chaleur (18) est disposé, qui transfère de la chaleur du milieu de travail du premier circuit (10) de milieu de travail au milieu de travail du second circuit (11) de milieu de travail, le troisième échangeur de chaleur (18) étant élaboré tel que le premier et le second circuit (10, 11) de milieu de travail sont séparés de manière fluidique l'un de l'autre.

11. Dispositif (1) selon la revendication 10, **caractérisé en ce que** dans le second circuit (11) de milieu de travail, un récupérateur (19) est disposé entre l'au moins une turbine (13) et le troisième échangeur de chaleur (18), et entre l'au moins un compresseur (17) et le deuxième échangeur de chaleur (3), pour refroidir le milieu de travail du second circuit (11) de milieu de travail entre l'au moins une turbine (13) et le troisième échangeur de chaleur (18) et pour chauffer le milieu de travail du second circuit (11) de milieu de travail entre l'au moins un compresseur (17) et le deuxième échangeur de chaleur (3).

12. Dispositif (1) selon l'une des revendications 8 à 11, **caractérisé en ce que** l'au moins un échangeur de chaleur (2) du premier circuit (10) de milieu de travail est situé dans la zone du moteur à combustion, de préférence dans le circuit de refroidissement du moteur à combustion, en particulier directement en aval du moteur à combustion et **en ce que** l'au moins un échangeur de chaleur (3) du second circuit (11) de milieu de travail est situé dans la zone du flux d'échappement du moteur à combustion, de préférence directement en aval du moteur à combustion.

13. Procédé d'utilisation de la chaleur perdue d'un moteur à combustion, en particulier l'utilisation de la chaleur perdue d'un moteur de véhicule, comprenant les étapes consistant à :
chauffer un milieu de travail grâce à au moins un échangeur de chaleur (2, 3), le ou les échangeurs de chaleur (2, 3) sont de préférence disposés dans la région du moteur à combustion et/ou dans la région du flux de gaz d'échappement du moteur à combustion ;
alimenter une turbine (4, 12, 13) connectée à un générateur (5, 14, 15) grâce au milieu de travail pour générer une puissance électrique ou mécanique ;
refroidir le milieu de travail grâce à un refroidisseur (6) ;
compresser le milieu de travail grâce à un compresseur (7, 16, 17) ;
le milieu de travail s'écoulant dans un circuit (8, 10, 11) de milieu de travail ;
le milieu de travail, de préférence le dioxyde de carbone, le propane, le méthanol ou l'éthanol ou un mélange de ces fluides, étant dans la totalité du circuit (8, 10, 11) de milieu de travail dans un état hypercritique/supercritique,
**caractérisé en ce que**
l'échangeur de chaleur (2) est disposé dans le circuit de refroidissement du moteur à combustion.

14. Procédé selon la revendication 13, comprenant en outre l'étape consistant à transférer une partie de la chaleur résiduelle du milieu de travail après la turbine (4, 12, 13) à un milieu de travail avant l'au moins un chauffage du milieu de travail grâce à l'au moins un l'échangeur de chaleur (2, 3), par exemple à l'aide d'au moins un récupérateur.

15. Procédé selon la revendication 13 ou 14, **caractérisé en ce que** le procédé est mis en oeuvre grâce à un dispositif (1) selon l'une des revendications 1 à 10.
